# FASCICULE DE BREVET EUROPEEN

(11) **EP 1 812 288 B1**
(45) Date de publication et mention de la délivrance du brevet: **06.08.2008**
(21) Numéro de dépôt: 05819334.3
(22) Date de dépôt: 07.11.2005
(51) Int. Cl.: B64C 1/06

(54) **CADRE DE STRUCTURE DE FUSELAGE D'AÉRONEF**
STRUKTURRAHMEN FÜR EINEN FLUGZEUGRUMPF
STRUCTURAL FRAME FOR AN AIRCRAFT FUSELAGE

(30) Priorité: 15.11.2004 FR 0452622
(43) Date de publication de la demande: 01.08.2007
(73) Titulaire: AIRBUS France, 31060 Toulouse Cédex (FR)
(72) Inventeur: CACCIAGUERRA, Bruno, F-31810 CLERMONT LE FORT (FR)
(74) Mandataire: Schmit, Christian Norbert Marie
(86) Numéro de dépôt international: PCT/FR2005/050932
(87) Numéro de publication internationale: WO 2006/051235

(56) Documents cités:
- DE-A1- 4 017 978
- DE-A1- 10 145 276
- US-A- 1 803 494
- US-A- 1 963 416
- US-A- 5 171 510
- US-A- 5 752 673

## Description

La présente invention concerne un cadre de structure de fuselage d'aéronef réalisant un support de plancher adapté à recevoir de fortes charges tout en restant de faible masse.

Les structures de fuselages d'aéronefs comportent des cadres disposés transversalement à l'axe du fuselage, la partie inférieure des cadres étant communément appelée cintre.

Pour combattre la tendance du plancher à se déformer sous l'action notamment de la pressurisation de l'intérieur de la cabine lorsque l'aéronef est en vol, le raccordement d'éléments de traverses de support d'un plancher tel que le plancher de la soute de l'aéronef sur les cadres est souhaitable.

La présente invention est particulièrement adaptée à la réalisation de cadres de structure d'aéronefs formant moyens support d'un plancher d'un aéronef, en constituant une structure pourvue d'un cintre métallique et d'une traverse composite, la traverse formant le support du plancher.

Le document US 5 752 673 décrit un cadre de structure de fuselage qui comporte un élément de cintre inférieur, une traverse de soutien d'un élément de plancher et un treillis de liaison entre l'élément de cintre inférieur et la traverse.

Au vu de cet art antérieur, la présente invention propose un cadre de structure de fuselage comportant un cintre inférieur, une traverse, de soutien d'un élément de plancher et un treillis de liaison entre le cintre inférieur et la traverse,
caractérisé en ce qu'il comprend un élément de cadre supérieur pourvu de bras de liaison avec la traverse et avec le cintre inférieur et formant, avec le cintre inférieur, ledit cadre du fuselage.

Cette configuration où la traverse est écartée de l'élément de cintre inférieur et reliée à ce dernier par un treillis métallique ou composite permet de réaliser un cadre de très forte inertie et de grande hauteur et ce pour une masse et un coût les plus faibles possibles, la structure inférieure constituée de la traverse, du treillis et du cintre inférieur participant à la rigidité globale du cadre.

En outre et selon un mode de réalisation avantageux, l'utilisation d'un treillis de liaison constitué de barres en matériau composite dont les extrémités sont éclissées sur la traverse et sur l'élément de cintre inférieur permet de minimiser les échanges thermiques entre la peau du fuselage et la traverse du cadre sur lequel sont installés des composants (structures ou systèmes).

D'autres caractéristiques et avantages de l'invention seront mieux compris à la lecture de la description qui va suivre d'un exemple non limitatif de réalisation de l'invention à la lumière des figures qui représentent:
- figure 1:: une vue de face d'un cadre de structure de fuselage selon l'invention;
- figures 2a, 2b:: des détails en perspective du cadre de la figure 1;
- figure 3:: une vue en perspective d'un détail du treillis du cadre de la figure 1;
- figure 4:: une vue de face agrandie d'une partie inférieure d'un élément de cadre selon l'invention
- figure 5:: une vue en perspective de deux cadres d'une structure de fuselage selon l'invention.

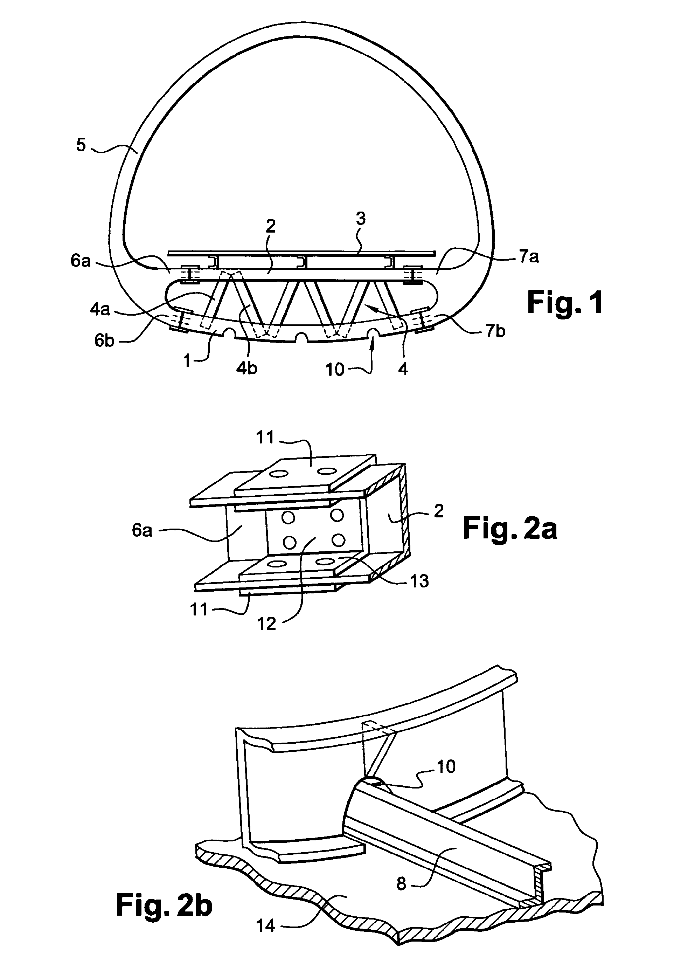

La figure 1 est une vue générale d'un cadre de structure de fuselage comportant un cintre inférieur 1, une traverse 2 de soutien d'un élément de plancher 3 et un treillis de liaison 4 entre le cintre inférieur 1 et la traverse 2.

Cette configuration où la traverse 2 est séparée du cintre inférieur 1 et reliée à ce dernier par un treillis 4 permet de réaliser un cadre de très forte inertie et de grande hauteur.

La structure inférieure comprenant la traverse 2, le treillis 4, constitué des barres 4a, 4b dont les extrémités sont éclissées sur le cintre inférieur 1 et sur la traverse 2, et, le cintre inférieur 1 supporte parfaitement le plancher et raidit tout le cadre, ce qui est par exemple particulièrement adapté à une configuration avion cargo, l'espace entre la traverse 2 et le cintre inférieur 1 ainsi que l'emploi de matériaux composites pour la traverse 2 et le treillis 4 permettant de minimiser les échanges thermiques entre la peau du fuselage et la traverse du cadre sur lequel sont installés les composants.

Pour le raccordement du cintre et de la traverse, l'élément de cadre supérieur 5 est pourvu de bras 6a, 6b, 7a, 7b de liaison avec la traverse 2 et avec le cintre inférieur 1. L'élément de cadre supérieur 5 et le cintre inférieur 1 font partie d'un cadre de la structure du fuselage.

Selon l'exemple de la figure 1, les bras de liaison 6a, 6b, 7a, 7b forment une fourche à chaque extrémité du cadre supérieur 5, le cintre inférieur 1 et la traverse 2 étant fixés sur les bras 6a, 6b, 7a, 7b de chaque fourche par éclissage.

La fixation des bras sur la traverse et sur le cintre inférieur est réalisé par éclissage, un exemple étant représenté en figure 2a pour la fixation du bras 6a sur une extrémité de la traverse 2.

Selon cet exemple, le cintre inférieur 1 et la traverse 2 sont fixés sur les bras 6a, 6b, 7a, 7b de chaque fourche par éclissage bout à bout à l'aide des éclisses 11, 12 et des boulons 13.

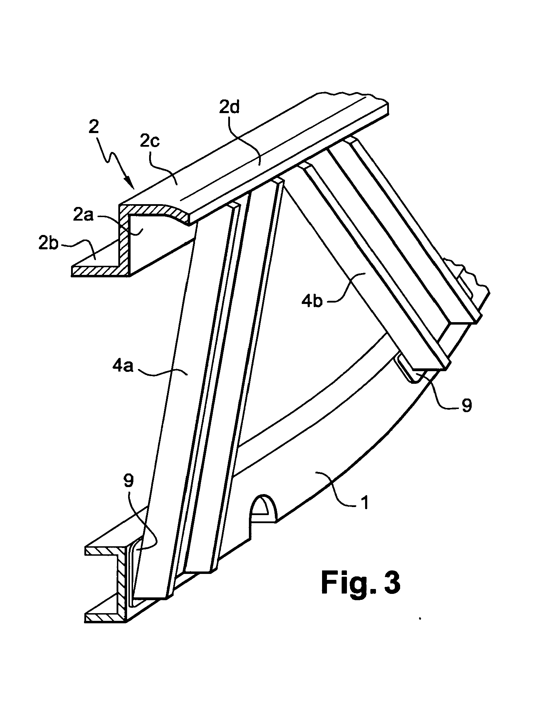

En mode de réalisation préférentiel, les barres 4 sont, comme représenté en figure 3 des poutres en matériau composite à section en forme de U, la traverse 2 elle aussi en matériaux composites, étant réalisé selon cet exemple sous forme d'une âme verticale 2a munie de deux toiles horizontales longitudinales 2b, 2c de directions opposées disposées sur les arêtes latérales de l'âme 2a, une des toiles pouvant être pourvue sur son arête libre d'une lèvre rabattue 2d s'opposant à tout gauchissement de la toile 2c.

Le cintre inférieur 1 peut, comme la traverse 2, être un cintre en matériau composite mais peut aussi être un cintre métallique tel qu'un cintre aluminium usiné.

Dans le cas où le cintre inférieur 1 est un cintre métallique, celui-ci est peint préalablement à la fixation des barres et du cadre supérieur et un pli de tissu de verre 9 est disposé entre les extrémités des barres 4a, 4b et le cintre inférieur 1 pour éviter tout risque de corrosion à l'interface entre les barres et le cintre inférieur.

Selon l'exemple de la figure 2b, le cintre inférieur 1 est une poutre nervurée pourvue d'ouvertures 10 de passage de lisses longitudinales 8 de support de panneaux 14 du fuselage.

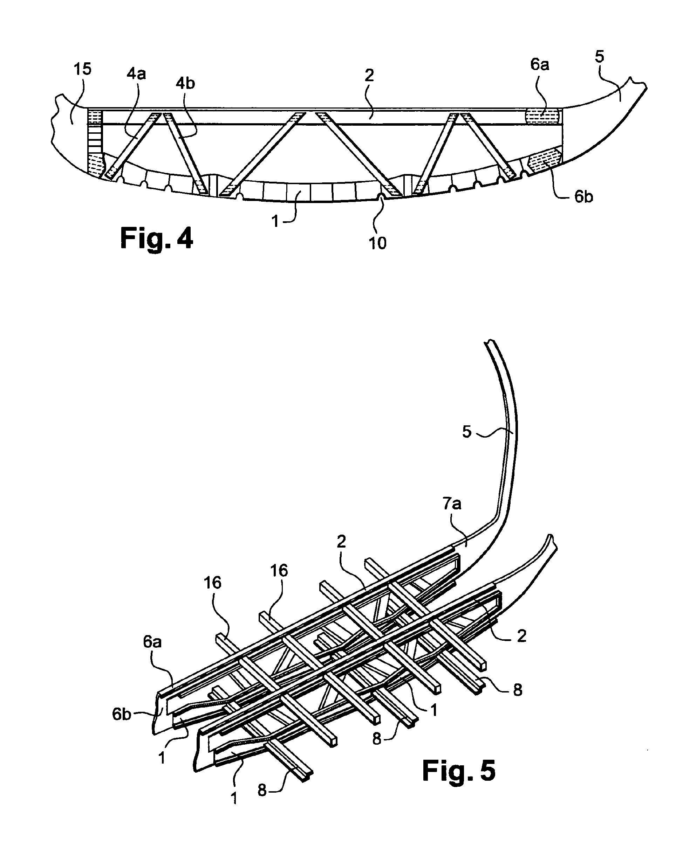

La figure 5 est une vue de la réalisation de la structure d'un segment de fuselage avec les lisses 8 et des longerons 16 reliant les cadres.

Les cadres sont disposés espacés les uns derrière les autres le long de la structure du fuselage et sont de dimensions variables en fonction de leur position longitudinale et de la forme du fuselage.

Le cadre de structure de fuselage selon l'invention est adapté à être réalisé avec des éléments métalliques ou par une structure mixte métal-composite, le treillis composite s'éclissant sur un cintre métallique ou composite.

L'invention selon laquelle l'ensemble des éléments, cintre, cadre traverse et treillis de liaison participe à la rigidité de l'ensemble n'est pas limitée à l'exemple représenté et notamment la figure 4 représente une variante pour laquelle le cadre supérieur est de type dissymétrique et comporte à l'une de ses extrémités une fourche pourvue de bras 6a, 6b et à son autre extrémité une plaque de fixation unitaire 15, l'ensemble des éléments cintre, traverse et barres pouvant être en matériau composite ou au moins l'un des éléments pouvant être métallique, les autres étant en matériau composite.

## Revendications

1. Cadre de structure de fuselage comportant un cintre inférieur (1), une traverse (2), de soutien d'un élément de plancher (3) et un treillis de liaison (4) entre le cintre inférieur (1) et la traverse (2), **caractérisé en ce qu'**il comprend un élément de cadre supérieur (5) pourvu de bras (6a, 6b, 7a, 7b) de liaison avec la traverse (2) et avec le cintre inférieur (1) et formant, avec le cintre inférieur (1), ledit cadre du fuselage.

2. Cadre de structure de fuselage selon la revendication 1 **caractérisé en ce que** le treillis de liaison (4) est constitué de barres (4a, 4b) dont les extrémités sont éclissées sur la traverse (2) et sur le cintre inférieur (1).

3. Cadre de structure de fuselage selon la revendication 2 **caractérisé en ce que** les barres (4) sont des poutres en matériau composite à section en forme de U.

4. Cadre de structure de fuselage selon l'une des revendications précédentes **caractérisé en ce que** les bras de liaison (6a, 6b, 7a, 7c) forment une fourche à chaque extrémité du cadre supérieur (5), le cintre inférieur (1) et la traverse (2) étant fixés sur les bras (6a, 6b, 7a, 7b) de chaque fourche par éclissage.

5. Cadre de structure de fuselage selon l'une quelconque des revendications précédentes **caractérisé en ce que** le cintre inférieur (1) est une poutre nervurée pourvue d'ouvertures (10) de passage de lisses longitudinales (8).

6. Cadre de structure de fuselage selon l'une quelconque des revendications précédentes **caractérisé en ce que** le cintre inférieur (1) est un cintre métallique usiné, un pli de tissu de verre (9) étant disposé entre les extrémités des barres (4a, 4b) et le cintre inférieur (1).

7. Cadre de structure de fuselage selon l'une quelconque des revendications 1 à 5 **caractérisé en ce que** le cintre inférieur (1) est un cintre en matériau composite.

8. Cadre de structure de fuselage selon la revendication 4 **caractérisé en ce que** le cintre inférieur (1) et la traverse (2) sont fixés sur les bras (6a, 6b, 7a, 7b) de chaque fourche par éclissage bout à bout.

9. Cadre de structure de fuselage selon l'une quelconque des revendications précédentes **caractérisé en ce qu'**il est réalisé par une structure mixte métal-composite.

## Claims

1. A fuselage structural frame comprising a bottom bow member (1), a cross member (2), for supporting a floor element (3) and a connecting trellis (4) between the bottom bow member (1) and the cross member (2), **characterised in that** it comprises a top frame element (5) provided with arms (6a, 6b, 7a, 7b) for connecting with the cross member (2) and with the bottom bow member (1) and forming, with the bottom bow member (1), said fuselage frame.

2. A fuselage structural frame according to claim 1, **characterised in that** the connecting trellis (4) consists of bars (4a, 4b), the ends of which are fishplated to the cross member (2) and to the bottom bow member (1).

3. A fuselage structural frame according to claim 2, **characterised in that** the bars (4) are beams made from composite material with a U-shaped cross-section.

4. A fuselage structural frame according to one of the preceding claims, **characterised in that** the connecting arms (6a, 6b, 7a, 7c) form a fork at each end of the top frame (5), the bottom bow member (1) and the cross member (2) being fixed to the arms (6a, 6b, 7a, 7b) of each fork by fishplating.

5. A fuselage structural frame according to any one of the preceding claims, **characterised in that** the bottom bow member (1) is a ribbed beam provided with openings (10) for the passage of longitudinal rails (8).

6. A fuselage structural frame according to any one of the preceding claims, **characterised in that** the bottom bow member (1) is a machined metal bow member, a layer of glass cloth (9) being disposed between the ends of the bars (4a, 4b) and the bottom bow member (1).

7. A fuselage structural frame according to any one of claims 1 to 5, **characterised in that** the bottom bow member (1) is a composite material member.

8. A fuselage structural frame according to claim 4, **characterised in that** the bottom bow member (1) and the cross member (2) are fixed to the arms (6a, 6b, 7a, 7b) of each fork by end-to-end fishplating.

9. A fuselage structural frame according to any one of the preceding claims, **characterised in that** it is produced by a mixed metal/composite structure.

## Patentansprüche

1. Strukturrahmen eines Rumpfes, welcher einen unteren Bügel (1), einen Querträger (2), eine Stütze eines Elementes des Fußbodens (3) und ein Verbindungsgitter (4) zwischen dem unteren Bügel (1) und dem Querträger (2) umfasst, **gekennzeichnet dadurch, dass** er ein Element des oberen Rahmens (5) umfasst, welches mit Armen (6a, 6b, 7a, 7b) zur Verbindung mit dem Querträger (2) und mit dem unteren Bügel (1) versehen ist und das mit dem unteren Bügel (1) den besagten Rahmen des Rumpfes formt.

2. Der Strukturrahmen eines Rumpfes gemäß Anspruch 1, **gekennzeichnet dadurch, dass** das Verbindungsgitter (4) aus Balken (4a, 4b) besteht, deren Enden auf dem Querträger (2) und auf dem unteren Bügel (1) geschient sind.

3. Der Strukturrahmen eines Rumpfes gemäß Anspruch 2, **gekennzeichnet dadurch, dass** die Balken (4) Träger aus Verbundmaterial mit einem u-förmigen Querschnitt sind.

4. Der Strukturrahmen eines Rumpfes gemäß einem der vorherigen Ansprüche, **gekennzeichnet dadurch, dass** die Verbindungsarme (6a, 6b, 7a, 7b) einer Gabel an jedem Ende des unteren Rahmens (5) formen, wobei der untere Bügel (1) und der Querträger (2) auf den Armen (6a, 6b, 7a, 7b) einer jeden Gabel durch Schienen fixiert sind.

5. Der Strukturrahmen eines Rumpfes gemäß einem der vorangegangen Ansprüche, **gekennzeichnet dadurch, dass** der untere Bügel (1) ein gerippter Träger ist, welcher mit Durchgangsöffnungen (10) für Längsträger (8) versehen ist.

6. Strukturrahmen eines Rumpfes gemäß einem der vorangegangen Ansprüche, **gekennzeichnet dadurch, dass** der untere Bügel (1) ein aus Metall hergestellter Bügel ist, wobei ein Falz aus Glasgewebe (9) zwischen den Enden der Balken (4a, 4b) und dem unteren Bügel (1) angeordnet ist.

7. Der Strukturrahmen eines Rumpfes gemäß einem der Ansprüche 1 bis 5, **gekennzeichnet dadurch, dass** der untere Bügel (1) ein Bügel aus Verbundmaterial ist.

8. Der Strukturrahmen eines Rumpfes gemäß Anspruch 4, **gekennzeichnet dadurch, dass** der untere Bügel (1) und der Querträger (2) auf den Armen (6a, 6b, 7a, 7b) von jeder Gabel durch eine Schienenverbindung der Enden verbunden sind.

9. Der Strukturrahmen eines Rumpfes gemäß einem der vorangegangenen Ansprüche, **gekennzeichnet dadurch, dass** er durch eine gemischte Metallverbundstruktur realisiert ist.
